# EUROPEAN PATENT APPLICATION

(11) **EP 2 611 177 A2**
(43) Date of publication of application: **03.07.2013**
(21) Application number: 12195467.1
(22) Date of filing: 04.12.2012
(51) Int. Cl.: H04N 13/04

(54) **Display apparatus, glasses apparatus linked with display apparatus and controlling method thereof**

(30) Priority: 29.12.2011 KR 20110146557; 30.12.2011 KR 20110147320; 20.04.2012 KR 20120041692
(71) Applicant: Samsung Electronics Co., Ltd, Gyeonggi-do 443-742 (KR)
(72) Inventor: Choi, Hoon, Gyeonggi-do (KR); Lee, Eun-jae, Seoul (KR); Kim, Kyoung-min, Gyeonggi-do (KR); Kim, Hak-jae, Gyeonggi-do (KR); Jang, Do-hyun, Seoul (KR)
(74) Representative: Robinson, Ian Michael

(57) **Abstract**

A display apparatus, glasses apparatus linked with the display apparatus, and control method thereof are provided. The glasses apparatus which is linked with the display apparatus alternately displays a plurality of content in image frame units includes: an input button, and a controller which performs a turn on operation when the input button is selected in a state where the glasses apparatus is turned off and which performs different control operations corresponding to a duration that the input button is pushed, a number of times the input button is pushed, or both the duration and the number of times the input button is pushed.

## Description

### CROSS-REFERENCE TO RELATED APPLICATIONS

This application claims priority from Korean Patent Application No. 10-2011-0146557, filed in the Korean Intellectual Property Office on December 29, 2011, and Korean Patent Application No. 10-2011-0147320, filed in the Korean Intellectual Property Office on December 30, 2011, and Korean Patent Application No. 10-2012-0041692, filed in the Korean Intellectual Property Office on April 20, 2012, the disclosure of which are incorporated herein by reference.

### BACKGROUND

### 1. Field

Methods and apparatuses consistent with the exemplary embodiments relate to a display apparatus, glasses apparatus linked with the display apparatus, and controlling method thereof, and more particularly, to a display apparatus which may provide different content to a plurality of users, a glasses apparatus linked with the display apparatus, and controlling method thereof.

### 2. Description of the Related Art

Thanks to development of electronic technologies, various types of electronic products are being developed and provided. Such products include various display apparatuses such as TVs, mobile phones, PCs, notebook PCs, and PDAs that are widely being used in homes.

As the use of display apparatuses increases, users' needs for various functions have also increased. Thus, various manufacturers are engaging in increased efforts to satisfy users' needs, by presenting products having new functions such as provision of 3D content.

In addition, efforts are being made to develop display apparatuses where a plurality of users can view different content at the same time provided by a plurality of content providers (for example, internet broadcasting station, ground-wave broadcasting station, cable broadcasting station, DVD player, and Blu-ray player etc.).

In a case of such a display apparatus, a user wearing a glasses apparatus connected to a particular content from among a plurality of different content can view only the corresponding content. However, there is a need to for a method to change a content mode through a simple operation in a case where the user wishes to change the content that he/she is viewing to another content.

In addition, there is a need to limit viewing of content according to each viewer, in a case where certain content is not suitable for a user when viewing content at the same time using such a display apparatus.

### SUMMARY

According to the present invention there is provided an apparatus and method as set forth in the appended claims. Other features of the invention will be apparent from the dependent claims, and the description which follows.

An aspect of the exemplary embodiments relates to a glasses apparatus and control method thereof which may minimize and conveniently perform button inputting to performing a content conversion, pairing, turning on/off of power, in a case where a plurality of viewers view different content in one display apparatus.

Another aspect of the exemplary embodiments relates to a display apparatus and control method thereof which provides a plurality of content to a plurality of users, and which may limit the viewing of content per viewer in a case where it is not suitable for some of the viewers to view certain content.

According to an exemplary embodiment of the present disclosure, a glasses apparatus linked with a display apparatus which alternately displays a plurality of content in image frame units may include input button; and a control unit which performs a turn on operation when the input button is selected in a state where the glasses apparatus is turned off, and when the input button is pushed in a state where the glasses apparatus is turned on, performs a different control operation corresponding to a duration the input button is pushed, a number of times the input button is pushed or a combination thereto, and the number of times the input button is pushed may be counted during a predetermined time.

Meanwhile, the glasses apparatus may further include an interface unit for communicating with the display apparatus, wherein the control unit may transmit a content changing command for changing content from among the plurality of content through the interface unit and performs a content changing operation, when the input button is selected for or less than a predetermined first critical time in a state where the glasses apparatus is turned on.

In this case, the control unit may control the interface unit and perform a pairing operation with the display apparatus, when the input button is selected for more than the predetermined first critical time and equal to or less than a second critical time in a state where the glasses apparatus is turned on.

In this case, the control unit may perform a turn off operation, when the input button is selected for more than the second critical time in a state where the glasses apparatus is turned on.

Meanwhile, the glasses apparatus may further include a sensor unit which senses whether or not the glasses apparatus is in use, wherein the control unit may perform a turn off operation when the glasses apparatus is not used for a predetermined time.

In this case, the glasses apparatus may further include a first shutter glass unit; a second shutter glass unit; an interface unit which receives a synchronization signal from the display apparatus; and a glass driving unit which drives the first and second shutter glass unit alternately or simultaneously according to the synchronization signal.

According to an exemplary embodiment of the present disclosure, a control method of a glasses apparatus which is linked with a display apparatus alternately displaying a plurality of content in image frame units may include performing a turn on operation when an input button provided in the glasses apparatus is selected in a state where the glasses apparatus is turned off; counting a selection time of the input button when the input button is selected in a state where the glasses apparatus is turned on; and performing a control operation corresponding to the selection time.

In this case, the performing the control operation may transmit a content changing command for changing viewable content from among the plurality of content to the display apparatus, and perform the content changing command, when the selection time of the input button is equal to or less than a predetermined first critical time.

According to another exemplary embodiment of the present disclosure, a display apparatus may include a plurality of receiving units each of which receives a plurality of content; a signal processing unit which processes each of the received plurality of content and forms image frames, and which generates sub frames for limiting viewing of each image frame; a display unit which combines the image frames and sub frames output from the signal processing unit and displays a plurality of content views; an interface unit which is connected to a glasses apparatus according to a predetermined communication standard; a synchronization signal generating unit which generates a synchronization signal which synchronizes the glasses apparatus at an output timing of a content view mapped to the glasses apparatus of among the plurality of content views; and a control unit which selectively allows viewing of the content, according to whether or not there is a viewing authority for content displayed on the mapped content view.

Herein, the sub frame may be a frame which is generated when it is displayed consecutively with the image frame in combination with the image frame so that the image frame is perceived as a white noise frame.

In addition, the sub frame may be a complementary frame corresponding to the image frame.

In addition, the control unit may control the interface unit to transmit to the glasses apparatus the synchronization signal for turning on the glasses apparatus during a section when the image frame is displayed, when the glasses apparatus has a viewing authority for the content, and may control the synchronization signal generating unit and interface unit to generate the synchronization signal for turning on the glasses apparatus and to transmit the generated synchronization signal to the glasses apparatus during the section when the image frame and sub frame are displayed, when the glasses apparatus does not have a viewing authority for the content.

In addition, the control unit may control the interface unit to transmit to the glasses apparatus the synchronization signal for turning on the glasses apparatus during the section when the image frame is displayed when the glasses apparatus has a viewing authority for the content, and control the synchronization signal generating unit and interface unit to generate a synchronization signal of a disable state and transmit the generated synchronization signal to the glasses apparatus, when the glasses apparatus does not have a viewing authority for the content.

In addition, the control unit may control the interface unit to transmit to the glasses apparatus the synchronization signal for turning on the glasses apparatus during the section when the image frame is displayed when the glasses apparatus has a viewing authority for the content, and control the interface unit not to transmit the synchronization signal, when the glasses apparatus does not have a viewing authority for the content.

The display apparatus may further include a storage unit where viewing authority information is stored, wherein the control unit determines whether or not the glasses apparatus has a viewing authority using identification information and viewing authority information pre-stored in the storage unit, when the identification information is received from the glasses apparatus through the interface unit.

According to another exemplary embodiment of the present disclosure, a control method of a display apparatus may include receiving each of a plurality of content; processing each of the received plurality of content and forming image frames, and generating sub frames for limiting viewing of each image frame; combining image frames and sub frames output from the signal processing unit and displaying a plurality of content views; generating a synchronization signal which synchronizes the glasses apparatus at an output timing of a content view mapped to the glasses apparatus of among the plurality of content views; and selectively allowing viewing of the content, according to whether or not there is a viewing authority for content displayed on the mapped content view.

The sub frame may be a frame which is generated when it is displayed consecutively with the image frame in combination with the image frame so that the image frame is perceived as a white noise frame.

In addition, the sub frame may be a complementary frame corresponding to the image frame.

In addition, the selectively allowing viewing the content may transmit a synchronization signal for turning on the glasses apparatus during a section when the image frame is displayed when the glasses apparatus has a viewing authority for the content, and generate a synchronization signal for turning on the glasses apparatus during a section when the image frame and sub frame are displayed and transmit the generated synchronization signal to the glasses apparatus, when the glasses apparatus does not have a viewing authority for the content.

In addition, the selectively allowing viewing the content may transmit the synchronization signal for turning on the glasses apparatus during the section when the image frame is displayed, when the glasses apparatus has a viewing authority for the content, and generate a synchronization signal of a disable state and transmit the generated synchronization signal to the glasses apparatus, when the glasses apparatus does not have a viewing authority for the content.

In addition, the selectively allowing viewing the content may transmit to the glasses apparatus the synchronization signal for turning on the glasses apparatus during the section when the image frame is displayed, when the glasses apparatus has a viewing authority for the content, and may not transmit the synchronization signal, when the glasses apparatus does not have a viewing authority for the content.

The selectively allowing viewing the content may determine whether or not the glasses apparatus has a viewing authority using identification information and pre-stored viewing authority information, when the identification information is received from the glasses apparatus.

In this case, the performing the pairing operation may perform the pairing operation with the display apparatus when the input button selection time is more than the first critical time and is equal to or less than the second critical time.

According to another exemplary embodiment of the present disclosure, a display apparatus includes: a signal processor which forms image frames from content, and generates sub frames for limiting a viewing of the image frames; a synchronization signal generator which generates a synchronization signal to synchronize a glasses apparatus to an output timing of a content view; and a controller which selectively allows viewing of the content only when there is a viewing authority to view the content displayed in the content view.

According to another exemplary embodiment of the present disclosure, a control method of a display apparatus includes: forming image frames corresponding to content and generating sub frames for limiting a viewing of the image frames; generating a synchronization signal for synchronizing a glasses apparatus to an output timing of a content view; and selectively allowing viewing of the content only when there is a viewing authority to view the content displayed in the content view.

### BRIEF DESCRIPTION OF THE DRAWINGS

The above and/or other aspects of the present disclosure will be more apparent by describing certain present disclosure with reference to the accompanying drawings, in which:

FIGs. 1 and 2 are views illustrating a system providing a plurality of content according to an exemplary embodiment;

FIG. 3 is a mimetic diagram for illustrating a glasses apparatus according to an exemplary embodiment;

FIG. 4 is a block diagram for explaining a configuration of a display apparatus according to an exemplary embodiment;

FIG. 5 is a block diagram for explaining a detailed configuration of a signal processing unit according to an exemplary embodiment;

FIG. 6 is a block diagram for explaining a configuration of a glasses apparatus according to an exemplary embodiment;

FIG. 7 is a flowchart for explaining a method for driving a glasses apparatus according to an exemplary embodiment;

FIG. 8 is a flowchart for specifically explaining a control operation using a glasses apparatus according to an exemplary embodiment;

FIGs. 9a and 9b are mimetic diagrams illustrating a configuration of a system which provides a plurality of content according to an exemplary embodiment;

FIG. 10 is a block diagram illustrating a configuration of a display apparatus according to an exemplary embodiment;

FIG. 11 is a block diagram for explaining a specific configuration of a signal processing unit according to an exemplary embodiment;

FIG. 12 is a view for explaining a synchronization signal for restrictively allowing viewing of content;

FIG. 13 is a block diagram illustrating a configuration of a display apparatus 1100 according to another exemplary embodiment;

FIG. 14a is a view illustrating viewing authorization information set per glasses apparatus;

FIG. 14b is a view illustrating viewing authorization information set per channel; and

FIG. 15 is a flowchart illustrating a control method of a display apparatus and glasses apparatus according to another exemplary embodiment.

### DETAILED DESCRIPTION

Certain exemplary embodiments are described in greater detail below with reference to the accompanying drawings.

In the following description, like drawing reference numerals are used for like elements, even in different drawings. The matters defined in the description, such as detailed construction and elements, are provided to assist in a comprehensive understanding of exemplary embodiments. However, exemplary embodiments can be practiced without those specifically defined matters. Also, well-known functions or constructions are not described in detail since they would obscure the application with unnecessary detail.

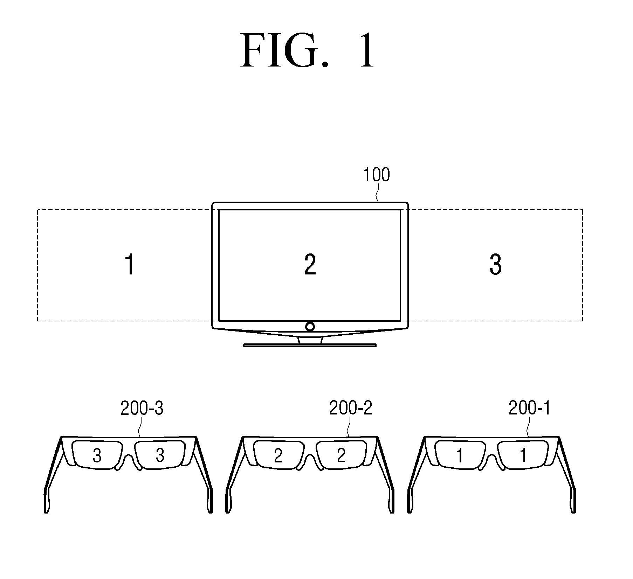

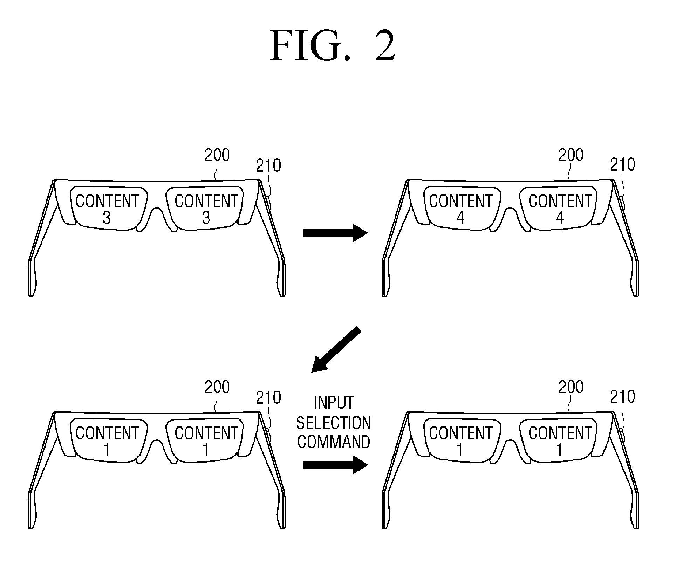

FIGs. 1 and 2 illustrate a system according to an exemplary embodiment of the present disclosure which provides a plurality of content to users. As illustrated in FIGs. 1 and 2, this system includes a display apparatus 100 and a glasses apparatus 200.

The display apparatus 100 alternately displays a plurality of content, generates a synchronization signal which synchronizes a glasses apparatus 200 corresponding to each of the content, and transmits the synchronization signal to the glasses apparatus 200. When one content is displayed according to the synchronization signal, the glasses apparatus 200 opens both a left side shutter glass and right side shutter glass. Accordingly, a viewer wearing the glasses apparatus 200 may view the one content.

Meanwhile, according to an exemplary embodiment of the present disclosure, when a switching mode is initiated, the display apparatus 100 and glasses apparatus 200 may consecutively convert content and provide the content to a user. More specific explanation will be made with reference to FIGs. 1 and 2.

As illustrated in FIG. 1, the display apparatus 100 alternately displays content 1 to content 3 in image frame units. In addition, the glasses apparatus 200-2 is synchronized to a display timing of content 2, opens a shutter glass, and provides content 2 to the user wearing the glasses apparatus 200-2. The glasses apparatus 200-1 is synchronized to a display timing of content 3, opens a shutter glass, and provides content 3 to the user wearing the glasses apparatus 200-1. The glasses apparatus 200-3 is synchronized to a display timing of content 1, opens a shutter glass, and provides content 1 to the user wearing the glasses apparatus 200-3.

Meanwhile, as illustrated in FIG. 2, when a switching command is input through an input button provided in the glasses apparatus 200 and a switching mode is initiated, the display apparatus 100 and glasses apparatus 200 performs a content conversion operation. Accordingly, the user wearing the glasses apparatus 200 may consecutively view content 3, content 4, and content 1. When a selection command is input through the input button 210, the glasses apparatus 200 is synchronized to content 1 which the user viewed at a point where the selection command was input and turns on both the left shutter glass and right shutter glass. Accordingly, the user may selectively view content 1.

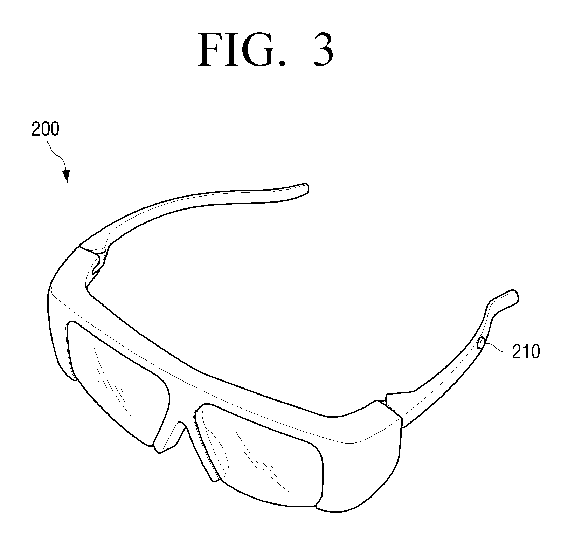

FIG. 3 is a mimetic diagram for illustrating a glasses apparatus according to an exemplary embodiment of the present disclosure.

With reference to FIG. 3, the glasses apparatus 200 includes the input button 210.

The input button 210 may be placed in a predetermined location of the glasses apparatus 200. The input button may be a mechanical type or an electronic type button. In a case where the input button 210 is a mechanical type button, when the user pushes the input button 210 with a predetermined pressure, it may convert kinetic energy into an electrical signal and transmit the signal to a control unit. In a case where the input button 210 is an electronic type button, the button may generate an electrical signal using electrical or magnetic changes, which occur when the user touches the input button 210, and transmit the electrical signal to a glasses control unit (not illustrated).

When the input button 210 is selected (pushed) in a state where the glasses apparatus 200 is turned off, a power unit (not illustrated) supplies power to the glasses apparatus 200, and turns on the glasses apparatus 200.

The glasses control unit (not illustrated) may further include a counting module (not illustrated) which may count a time that the input button 210 is selected.

The glasses control unit (not illustrated) controls the glasses apparatus 200 to perform a normal operation, a pairing operation, or a content changing operation, according to a control command input through the input button.

That is, when the input button is selected in a state where the glasses apparatus 200 is turned off, the glasses control unit (not illustrated) performs a turn on operation. When the input button is pushed in a state where the glasses apparatus 200 is turned on, the glasses control unit performs different control operations in response to a duration the input button 210 is pushed, a number of times the input button 210 is pushed or a combination thereof.

The duration the input button 210 is pushed is determined by comparing the duration the input button 210 is pushed with a first critical time, and is classified into a cases where the duration is less than the first critical time, more than the first critical time but less than a second critical time, and more than the second critical time. The glasses control unit performs different control operations according to the aforementioned three cases. In addition, the number of times the button is pushed is determined by counting a number of times the button is pushed during a predetermined time, for example, 2 seconds, and the glasses control unit performs control operations according to the counted number of times the button is pushed. In another exemplary embodiment, the glasses control unit (not illustrated) may be embodied to combine the duration the button is pushed and the number of times the button is pushed, and perform control operations accordingly.

A more detailed explanation on the operations of the glasses control unit (not illustrated) is provided below.

A normal operation is an operation where the glasses apparatus 200 comes out of a minimum power consumption mode and performs data communication with the display apparatus 100. That is, data communication between the glasses apparatus 200 and display apparatus 100 is performed as the display apparatus 100 transmits a synchronization signal, video data signal, audio data signal to the glasses apparatus 200, and the glasses apparatus 200 receives these signals and outputs the video data signal and audio data signal according to the synchronization signal.

In addition, in a state where the glasses apparatus 200 is turned on, when the input button 210 is selected for less than the predetermined first critical time (for example, 1 second), the glasses apparatus 200 transmits a content changing command for changing content that can be viewed from among the plurality of content, to the display apparatus 100.

A content changing operation refers to an operation where the display apparatus 100 displays a plurality of content (content 1 to 4), and changes the content into one of the plurality content (change of content view). In another exemplary embodiment, it may refer to an operation where content broadcasted on a particular channel is changed into content broadcasted on another channel, as a broadcasting channel is changed (change of channel).

A pairing operation is an operation of sharing information between the display apparatus 100 and glasses apparatus 200. That is, the glasses apparatus 200 requests certification, and the display apparatus 200 certifies whether or not it is a proper apparatus, using an ID of the glasses apparatus 200, and both apparatuses exchange information with each other.

When the input button 210 is selected for more than the predetermined first critical time and less than the second critical time (for example, 3 seconds) in a state where the glasses apparatus 200 is turned on, the glasses control unit (not illustrated) controls an interface unit and performs a pairing operation with the display apparatus 100. Even when the user does not select the input button 210, pairing operations may be performed automatically in a predetermined time interval. For example, the glasses apparatus 200 may perform pairing operations with the display apparatus 100 in 30 minute intervals. Such a time of automatic pairing operation may be controlled by the display apparatus 100.

When the input button 210 is selected for more than the predetermined second critical time in a state where the glasses apparatus 200 is turned on, the glasses control unit (not illustrated) performs a turn off operation. Herein, the turn off operation may be an operation end mode where power supplied to the glasses apparatus 200 is blocked and the glasses apparatus 200 stops operating, or a minimum power consumption mode where certain power is supplied without the power being completely blocked.

The operation end mode is a case where the power supplied to the glasses apparatus 200 is blocked and the operation of the glasses apparatus 200 is ended when the input button 210 is selected for more than the third critical time (for example, 5 seconds). On the other hand, the minimum power consumption mode is an operation where most of the operations of the glasses apparatus 200 are ended and only periodic pairing operations are performed when the input button 210 is selected for more than the second critical time (for example, 3 seconds) and less than the third critical time.

The operation end mode and minimum power consumption mode are similar to each other in the fact that data exchange is not performed between the glasses apparatus 200 and display apparatus 100, but in the operation end mode, the input button 210 has to be pushed in order for it to be converted to the operation mode again.

On the other hand, the minimum power consumption mode may be converted to the operation mode again also when the input button 210 is pushed or when a signal is received which senses motion through a sensor unit such as body motion.

If the glasses apparatus 200 is not used for a predetermined time, the glasses control unit (not illustrated) performs a turn off operation of the glasses apparatus 200. That is, the glasses control unit (not illustrated) may control a power unit (not illustrated) to convert operations of the glasses apparatus 200 into the minimum power consumption mode when it cannot detect a synchronization signal (or voice signal) for the predetermined time (for example, 30 seconds) or more. Otherwise, the glasses control unit (not illustrated) may detect movements of the glasses apparatus 200 or body motions through the sensor unit (not illustrated). In a case where the glasses control unit (not illustrated) cannot sense the body motions through the sensor unit, it converts the glasses apparatus 200 into the minimum power consumption mode just like in the case where it cannot detect the synchronization signal (or voice signal) for 30 seconds or more.

Otherwise, when the glasses control unit (not illustrated) receives a single view mode operation signal from the display apparatus 100, it controls operations of the interface unit of the glasses apparatus 200 not to receive the synchronization signal and converts the glasses apparatus 200 into the minimum power consumption mode just as in the case where the synchronization signal is not detected for 30 seconds or more.

The glasses apparatus 200 may further include a volume button which turns up or turns down a volume of an audio data signal received from the display apparatus 100. Such a volume button may be embodied in a wheel type. The user may be embodied to be able to turn up the volume by turning the wheel in a certain direction and turn down the volume by turning the wheel in the opposite direction.

Hereinbelow is a more detailed explanation on the display apparatus 100 and glasses apparatus 200 according to various exemplary embodiments of the present disclosure which perform the aforementioned functions.

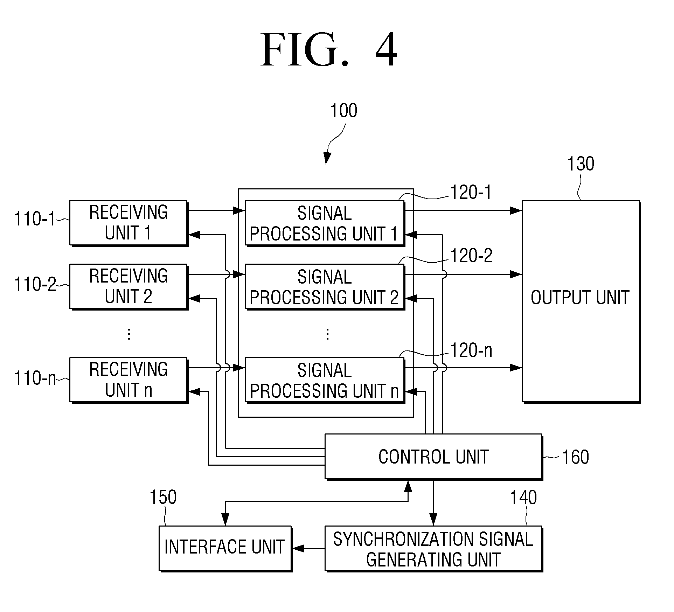

FIG. 4 is a block diagram for explaining a configuration of a display apparatus according to an exemplary embodiment of the present disclosure.

According to FIG. 4, the display apparatus 100 includes a plurality of receiving units 110-1, 110-2, ..., 110-n, a plurality of signal processing units 120-1, 120-2, ..., 120-n (e.g., signal processors), an output unit 130 (e.g., an output), a synchronization signal generating unit 140 (e.g., a synchronization signal generator), an interface unit 150 (e.g., an interface), and a control unit 160 (e.g., a controller). The display apparatus 100 in FIG. 3 may be embodied in various apparatuses having a display unit such as a TV, mobile phone, PDA, notebook PC, monitor, tablet PC, electronic book, electronic frame, and kiosk.

Each of the plurality of receiving units 110-1, 110-2, .. , 110-n receives different content. More specifically, each receiving unit 110-1, 110-2, ..., 110-n receives content from a broadcasting station which transmits broadcasting program content using a broadcasting network or from a web server which transmits a content file using the internet. In addition, each receiving unit 110-1, 110-2, ..., 110-n may receive content from various record media playing apparatuses provided inside the display apparatus 100 or connected to the display apparatus 100. A record media playing apparatus refers to an apparatus which plays content stored in various types of record media such as a CD, DVD, hard disk, Blu-ray disk, memory card, and USB memory.

In a case of an exemplary embodiment receiving content from a broadcasting station, the plurality of receiving units 110-1, 110-2, ..., 110-n may be embodied as a type including a configuration such as a tuner (not illustrated), demodulator (not illustrated), and equalizer (not illustrated). On the other hand, in a case of an exemplary embodiment receiving content from a source such as a web server, the plurality of receiving units 110-1, 110-2, ..., 110-n may be embodied as a network interface card (not illustrated). Otherwise, in a case of an exemplary embodiment which receives content from the aforementioned various record media playing apparatus, the plurality of receiving units 110-1, 110-2, ..., 110-n may be embodied as an interface unit (not illustrated) connected to a record media playing apparatus. As aforementioned, the plurality of receiving units 110-1, 110-2, ..., 110-n may be embodied as various types according to the exemplary embodiment.

In addition, the plurality of receiving units 110-1, 110-2, ..., 110-n do not necessarily have to receive content from the same type of source, and the plurality of receiving units 110-1, 110-2, ..., 110-n may receive content from other types of sources as well. For example, the receiving unit 1 110-1 may be embodied as a type including a tuner, demodulator, and an equalizer, while receiving unit 2 110-2 may be embodied as a network interface card.

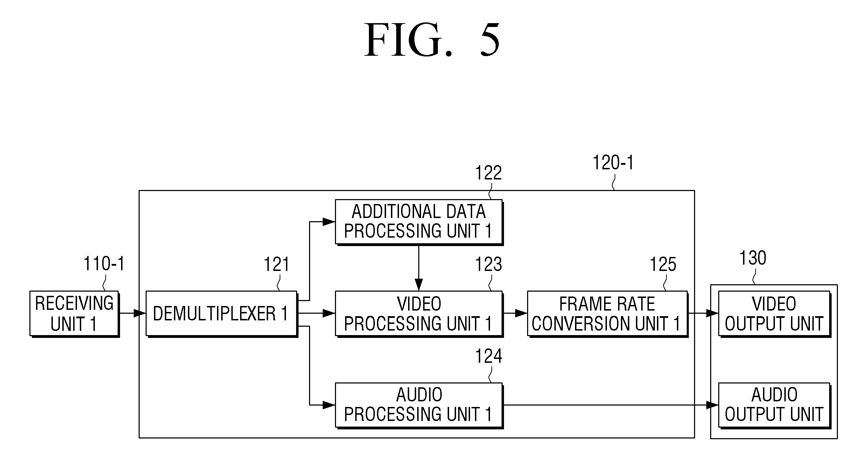

A plurality of signal processing units 120-1, 120-2, ..., 120-n may each process content received from the plurality of receiving units 110-1, 110-2, ..., 110-n and form an image frame. Detailed explanation is made with reference to FIG. 5.

FIG. 5 is a block diagram explaining a specific configuration of a signal processing unit according to an exemplary embodiment of the present disclosure.

With reference to FIG. 5, the signal processing unit 1 120-1 includes a multiplexer 1 121, additional data processing unit 1 122 (e.g., additional data processors), video processing unit 1 123 (e.g., a video processor), audio processing unit 1 124(e.g., an audio processor), and frame rate conversion unit 1 125(e.g., a frame rate converter). Although FIG. 5 illustrates only one signal processing unit 1 120-1, all other signal processing units 120-2, ..., 120-n may be embodied as a structure which is the same as or similar to FIG. 5.

When operating under a multi view mode, the demultiplexer 1 121-1 allocates additional data, video data and audio data included in each content to each processing unit. That is, it may separate the video data, audio data and additional data from the content received from each receiving unit 110-1, 110-2, ..., 110-n and may divide them into a corresponding additional data processing unit, video processing unit and audio processing unit.

In a case where additional information such as EPG (Electronic Program Guide) and subtitles are included in content, the additional data processing unit 1 122-1 may process the additional data separated by demultiplexer 1 and add subtitles etc. processed to be displayable through an output unit to a corresponding image frame.

The video processing unit 1 123-1 performs signal processing regarding the video data included in the content received from the demultiplexer 1 121-1. More specifically, the video processing unit 1 123-1 may include a decoder (not illustrated) which performs decoding on video data, and a scaler (not illustrated) which performs an up or down scaling in accordance with a screen size.

Besides, the video processing unit 1 123-1 may convert the video data into a data format corresponding to the frame rate conversion unit 1 125-1. More specifically, in a case where the input video data is a top-to-bottom format while the frame rate conversion unit 1 122-1 processes a frame in a side-by-side format, the video processing unit 1 123-1 may connect an image frame of each content horizontally side-by-side, and convert it into a side-by-side format.

The audio processing unit 1 124-1 performs signal processing on the audio data included in the content received from the demultiplexer 1 121-1. More specifically, the audio processing unit 1 124-1 may further include a decoder (not illustrated) which performs decoding on the audio data, a demodulator (not illustrated) which demodulates each decoded audio data into other frequency signals, and an output unit (not illustrated) which transmits each demodulated audio data to the glasses apparatus.

Each audio data output from the output unit 130 is provided to the user through an output means such as an ear phone provided in the glasses apparatus 100. Such configurations are not directly related to the exemplary embodiments, and thus additional illustration is omitted.

The frame rate conversion unit 1 125-1 converts a frame rate of the content provided from the video processing unit 1 123-1 so as to be suitable to a multi content display rate with reference to an output rate of the display apparatus 100. More specifically, in a case where the display apparatus 100 operates in 60 Hz, the frame rate conversion unit 1 125-1 may convert the frame rate of each content into n×60 Hz.

The video output unit of the output unit 130 alternately places the image frame of each content formed in the plurality of signal processing units 120-1, 120-2, ..., 120-n and displays them. More specifically, the output unit 130 multiplexes displays the image frame of each content provided from the plurality of signal processing units 120-1, 120-2, ..., 120-n in such a manner that at least one image frame from each content is placed alternately. Depending on circumstances, the output unit 130 may perform up or down scaling on the image frame of each of the content in accordance with a screen size.

For example, in a case of a display apparatus of a shutter glass method, the output unit 130 forms a first content image frame, second content image frame, ..., and nth content image frame in such a manner that at least one is placed and displayed alternately. The user wears the glasses apparatus 200 which is linked at a timing when the content is displayed in the output unit 130, and views the content that he/she wants. More specifically, a left eye shutter glass and right eye shutter glass are provided in the glasses apparatus 200. The left eye shutter glass and right eye shutter glass are turned on/off alternately when viewing 3D content, but as aforementioned, when viewing a frame where at least one image frame is alternately placed, the left eye shutter glass and right eye shutter glass are turned on/off simultaneously according to an output timing of the content synchronized to the glasses apparatus. Accordingly, the user becomes able to view the content separately from other users.

As aforementioned, it is possible to name a mode which places and displays the image frame of each of the content alternately as a multi view mode (e.g., dual view mode). In a case of operating in a normal (or single view) mode, which displays only one 2D content or 3D content, the display apparatus 100 may utilize one of the plurality of receiving units 110-1, 110-2, ..., 110-n and process the content. When the user selects a multi-view mode during a normal mode, the display apparatus 100 utilizes the rest of the receiving units as well, and process the data in the aforementioned method.

Meanwhile, the aforementioned content may be 2D content or 3D content. 3D content refer to content which enable users to feel the cubic or pop-out effect using multi-view images which express a same object in different perspectives.

In a case of using a plurality of 3D content, the output unit 130 may multiplex the left eye images and right eye images included in each 3D content provided from the plurality of frame rate conversion units 125-1, 125-2, ..., 125-n in a predetermined placement format, and place them alternately with image frames of other content.

Accordingly, a left eye image of a first content, right eye image of the first content, left eye image of a second content, right eye image of the second content, left eye image of a nth content, and right eye image of the nth content are consecutively placed and displayed, and the user may perceive the left eye image and right eye image of one content through the glasses apparatus 200.

The synchronization signal generating unit 140 generates a synchronization signal which synchronizes the glasses apparatus 200 which corresponds to each of the content, according to a display timing of each of the content. That is, the synchronization signal generating unit 140 generates a synchronization signal for synchronizing the glasses apparatus 200 to a display timing of the image frame on the content in a multi view mode.

The interface unit 150 transmits the synchronization signal to the glasses apparatus 200. In this case, the interface unit 150 may transmit the synchronization signal to the glasses apparatus using various methods.

For example, the interface unit 150 is equipped with a Bluetooth communication module and performs communication with the glasses apparatus 200, and may generate a transmission packet according to Bluetooth communication standard so that the synchronization signal can be included, and transmit it to the glasses apparatus 200.

That is, the transmission packet includes timing information for turning on/off a shutter glass of the glasses apparatus 200 synchronized to display timing of each of the content. More specifically, the transmission packet may include information on an offset time which turns on the left eye shutter glass, offset time which turns off the left eye shutter glass, offset time which turns on the right eye shutter glass, and offset time which turns off the right shutter glass of the glasses apparatus 200 from a standard point set for each content. Herein, the standard point is a point where a vertical synchronization signal is generated in the image frame of each of the content, and timing information on the point where the vertical synchronization signal is generated can also be included in the transmission packet.

In order to perform communication according to the Bluetooth communication method, the interface unit 150 performs pairing with each glasses apparatus. When the pairing is completed, in the first interface unit 150, information on each glasses apparatus 200, for example, an apparatus ID, etc., may be registered.

The interface unit 150 matches the display timing of each of the content with the information on the glasses apparatus 200, and generates one transmission packet according to the Bluetooth communication standard. For example, the interface unit 150 may match the different information on the glasses apparatus for each of the content according to the placement order of the image frame of the content. That is, in a case where 2 content signals are provided in a multi view mode, the image frames of the content placed in the first, third, ..., nth match the information on the first glasses apparatus, and the image frames of the content placed in the second, fourth, ..., n+1th may match the information on the second glasses apparatus (herein, n is an odd number). When the synchronization signal is received, the glasses apparatus checks the display timing which corresponds to its glasses apparatus information, and may turn on or off the shutter glass according to the checked display timing.

Although in the aforementioned exemplary embodiment, the interface unit 150 and glasses apparatus 200 perform communication according to the Bluetooth communication method, this is merely an exemplary embodiment. That is, other than the Bluetooth method, it is possible to use communication methods such as infrared communication and Zigbee etc., and it is obvious that communication can be performed according to various wireless communication methods which enable forming a communication channel in short distances and transmitting and receiving signals.

Meanwhile, the interface unit 150 may provide an infrared I/R synchronization signal having a different frequency to the glasses apparatus 200. In this case, the glasses apparatus 200 receives the synchronization signal having a certain frequency, and may turn on or off the shutter glass according to the display timing of the corresponding content.

In this case, the interface unit 150 may transmit to the glasses apparatus 200 an infrared signal where a high level of a first cycle and a low level of a second cycle are repeated alternately in a predetermined time interval based on the synchronization information. The glasses apparatus 200 may be embodied to turn on the shutter glass for the first cycle which is the high level, and to turn off the shutter glass for the second cycle which is the low level. Besides, the synchronization signal may be generated in various methods.

The control unit 160 controls the overall operations of the display apparatus 100. More specifically, the control unit 160 may control each of the plurality of receiving units 10-1, 110-2, ..., 110-n, plurality of signal processing units 120-1, 120-2, ..., 120-n, output unit 130, synchronization signal generating unit 140 and interface unit 150 to perform corresponding operations. Meanwhile, operations on each configuration of the display apparatus 100 have already been explained, and thus repeated explanation is omitted.

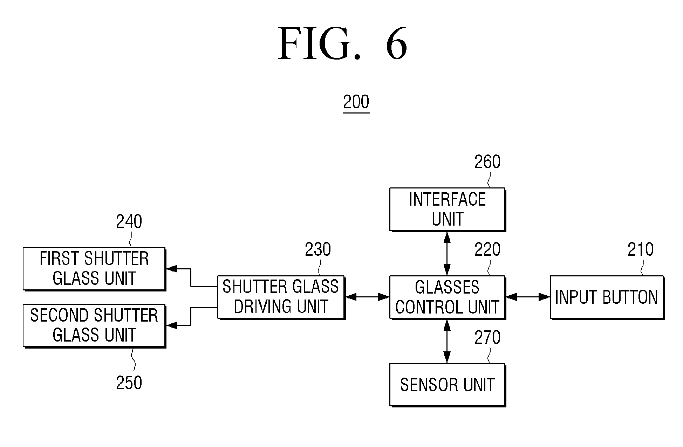

FIG. 6 is a block diagram for explaining a configuration of a glasses apparatus according to an exemplary embodiment of the present disclosure. The glasses apparatus 200 in FIG. 6 is linked with the display apparatus (100 in FIG. 2) which alternately displays a plurality of content in image frame units, and includes an input button 210, glasses control unit 220 (e.g. a glasses controller), shutter glass driving unit 230 (e.g., a shutter glass driver), first shutter glass unit 240 (e.g., a first shutter glass component or apparatus), second shutter glass unit 250, interface unit 260 (e.g., a second shutter glass component or apparatus), and sensor unit 270(e.g., a sensor, accelerometer, gyroscope, proximity sensor).

The input button 210 may be embodied as one button. When the input button 210 is pushed in a state where the glasses apparatus 200 is turned off, power supply is initiated by the power unit (not illustrated), operating the glasses apparatus 200. The input button 210 generates electric signals for the period of time it is selected by the user, and transmits the signals to the control unit 220.

When the input button 210 is selected by the user, the control unit 220 generates a trigger signal and initiates counting a time of button selection, and when the selecting ends, the control unit 220 ends counting and operates to count the total time of button selection by the user.

In the exemplary embodiments, the control unit 220 may be embodied to generate control signals according to not only the duration of time the user selected the input button 210 but also the number of times the user selected the input button 210 within a predetermined time. For example, when the input button 210 is selected once for less than 1 second in a state where the glasses apparatus 200 is turned on, the input button 210 either directly generates an electric signal satisfying the corresponding selection conditions or triggers the control unit 220 to perform the corresponding control operation.

In another exemplary embodiment, it would be possible to control operations of the glasses apparatus 200 by counting a time from a point where the input button 210 is first selected until when the selection button 210 is input again and then controlling the operation of the glasses apparatus 200 according to the counted time.

The input button 210 receives inputs of a power on/off command, pairing command, content conversion command, etc. of the glasses apparatus 200. For this, the input button 210 may be embodied as a touch sensor, mechanical type button, or electronic button etc. The input button 210 may be embodied to be able to irradiate different colors depending on the type of commands input into the glasses apparatus 200.

The control unit 220 controls the overall operations of the glasses apparatus 200. The control unit 220 transmits the synchronization signal received through the interface unit 260 to the shutter glass driving unit 230, and controls the operations of the shutter driving unit 230. That is, the control unit 220 controls the shutter glass driving unit 230 to generate a driving signal for driving a first shutter glass unit 240 and second shutter glass unit 250 based on the synchronization signal.

The control unit 220 may generate a corresponding control command signal according to the duration of time the input button 210 is selected or the number of times the input button 210 is selected, and control the shutter glass driving unit 230 or interface unit 260 according to the corresponding control command signal. In addition, the control unit 220 may perceive the time the input button 210 is selected, the number of times the button is selected, or the time from the first button selection point to the second button selection point differently and control the power unit (not illustrated) according to the on/off state of the glasses apparatus 200, control the interface unit 260, and may control the shutter glass driving unit 230.

In a state where the power of the glasses apparatus 200 is turned off, when the input button 210 is selected, the glasses apparatus 200 receives power from the power unit (not illustrated) and generates an operation initiation signal to start driving.

In a state where the power of the glasses apparatus 200 is turned on, when the input button 210 is selected for less than 1 second, the control unit 220 generates a content changing command and transmits it to the interface unit 260. The interface unit 260 transmits the content changing command to the display apparatus 100. The display apparatus 100 generates a new synchronization signal corresponding to the content changing command and transmits it to the glasses apparatus 200, and the glasses apparatus 200 becomes able to view the content changed according to the new synchronization signal. Explanation on content changing was made in detail hereinabove, and thus further explanation is omitted.

In a state where the power of the glasses apparatus 200 is turned on, when the input button 210 is selected for more than the first input time (for example, 1 second) and less than the second input time (for example, 3 seconds), the control unit 220 pairs the glasses apparatus 100 with the display apparatus 100 and other surrounding apparatuses connected to the display apparatus 100.

In a state where the glasses apparatus 200 is turned on, when the input button 210 is selected for more than 3 seconds, the control unit 220 blocks the power supplied to the glasses apparatus 200 and turns off the glasses apparatus 200. Herein, when the input button 210 is selected for more than the third input time (for example, 5 seconds), the control unit 220 completely blocks the power of the glasses apparatus 200 and ends the operations of the glasses apparatus 200.

The shutter glass driving unit 230 generates a driving signal based on the synchronization signal received from the control unit 220. The shutter glass driving unit 230 may open the first shutter glass unit 240 and second shutter glass unit 250 according to the display timing of one content of among the plurality of content displayed on the display apparatus 100, based on the synchronization signal.

The first shutter glass unit 240 and second shutter glass unit 250 turns on or off the shutter glass according to the driving signal received from the shutter glass driving unit 230. More specifically, the first shutter glass unit 240 and second shutter glass unit 250 open the shutter glass at the same time when one of the plurality of content is displayed, and opens all the shutter glasses when other content is displayed. Accordingly, the user wearing the glasses apparatus 200 may view one content.

Meanwhile, in a case of 3D content, the first shutter glass unit 240 and second shutter glass unit 250 may open and close each glass alternately. That is, it is possible to open the first shutter glass unit 240 at the timing when the left eye image which forms one 3D content is displayed and open the second shutter glass unit 250 at the timing when the right eye image is displayed, according to the driving signal.

When the switching mode is initiated, the control unit 220 controls the shutter glass driving unit 230 to consecutively change the open timing of the first shutter glass unit 240 and second shutter glass unit 250, and consecutively convert the viewable content of among the plurality of content. That is, the control unit 220 uses the synchronization signal to check the display timing of each content, and may control the shutter glass driving unit 230 to consecutively generate the driving signal based on the synchronization signal corresponding to each content. Accordingly, the first shutter glass unit 240 and second shutter glass unit 250 are opened whenever the image frame is displayed, and the user becomes able to consecutively view all content.

The interface unit 260 receives the synchronization signal from the display apparatus.

For example, in a case where the interface unit 260 is embodied as a Bluetooth communication module, the interface unit 260 may perform communication with the display apparatus 100 according to the Bluetooth communication standard, and receive the transmission packet where the synchronization signal is included. In this case, the transmission packet includes the timing information for turning on or off the first shutter glass unit 240 and second shutter glass unit 250 of the glasses apparatus 200 synchronized to the display timing of each content, and the glasses apparatus 200 may turn on or off the shutter glass according to the display timing corresponding to its glasses apparatus.

On the other hand, the interface unit 260 may be embodied as an IR receiving module, and receive the synchronization signal of an infrared ray format having a certain frequency. In this case, there may be included the timing information for turning on or off the first shutter glass unit 240 and second shutter glass unit 250 of the glasses apparatus 200 so as to be synchronized to the display timing of one content of among the plurality of content. In addition, the interface unit 260 consecutively receives the IR synchronization signal having a different frequency when the switching mode is initiated, and receives the IR synchronization signal which used to be received at the point when the switching mode ended.

Meanwhile, the interface unit 260 may receive information on the image frame rate and image frame cycle of each of the content, from the display apparatus 100.

According to the exemplary embodiment of the present disclosure, the glasses apparatus 200 changes the on/off time of the shutter glass so as to be synchronized to the display timing of each content when the switching mode is initiated, and synchronizes to on/off time of the shutter glass to the display timing of the certain content according to the selection command.

According to another exemplary embodiment of the present disclosure, a content conversion operation may be controlled by the display apparatus. Hereinbelow is an explanation on the operation according to another exemplary embodiment of the present disclosure with reference to the display apparatus 100 and glasses apparatus 200 illustrated in FIGs. 3 to 5. However, for convenience of explanation, repeated explanation on FIGs. 4 to 6 will be omitted, and only the particular characteristics of this exemplary embodiment will be explained.

The interface unit 150 provided in the display apparatus 100 performs communication with the glasses apparatus 200. For example, the interface unit 150 may be equipped with the Bluetooth communication module to perform wireless communication with the glasses apparatus 200. However, besides the Bluetooth method, communication methods such as infrared ray communication and Zigbee method etc. may be used as well, and it is obvious that communication may be performed according to various wireless communication methods that form a communication channel in a short distance and transmit and receive signals and data.

When a content changing command is received from the glasses apparatus 200, the control unit 160 of the display apparatus 100 performs an operation where content corresponding to the glasses apparatus 200 consecutively convert into other content of among the plurality of content. Such a conversion operation may be performed in various methods.

More specifically, when the content changing command is received, the control unit 160 may control the output unit 130 to change a placement pattern of the image frame of each of the content, and process so that the image frame of other content is located in the image frame location of the content corresponding to the glasses apparatus 200.

For example, let us assume a case where the image frame of the first to third content are alternately placed and displayed in the output unit 130. When the content changing command is received from the glasses apparatus synchronized to the first content, the control unit 140 may control the output unit 130 to consecutively place the image frame of the second content and the image frame of the third content in the image frame location of the first content. Accordingly, the user wearing the glasses apparatus becomes able to view all content while consecutively converting them.

Meanwhile, when the content changing command is received, the control unit 160 may control the synchronization signal generating unit 140 to change the synchronization signal, and process so that the glasses apparatus is synchronized to other content from among the plurality of content.

For example, in a case where the interface unit 150 is embodied as a Bluetooth communication module, the control unit 160 matches information on the glasses apparatus which transmits the content changing command signal at the display timing of each of the content, so that the glasses apparatus can be synchronized consecutively with each of the content. When the synchronization signal is received, the glasses apparatus turns on or off the shutter glass according to the display timing corresponding to its glasses apparatus information, and thus the user becomes able to consecutively view all content.

When the selection command is received through the interface unit 150 while the content corresponding to the glasses apparatus 200 are converted into other content from among the plurality of content, the conversion operation ends so that the content at the point of receiving the selection command can be viewed through the glasses apparatus.

More specifically, in order to consecutively convert the content synchronized to the glasses apparatus, when the selection command is input from the glasses apparatus while changing the placement pattern of the content or changing the synchronization signal, the control unit 160 may synchronize the glasses apparatus based on the placement pattern of the content or the synchronization signal at the point when the selection command is input.

That is, the control unit 160 ends the change of the placement pattern of the content at the point when the selection command is input, and consecutively displays the plurality of content according to the placement pattern of the content repositioned at the end point. In addition, the control unit 160 may match the glasses apparatus information at the display timing of the content displayed at the point when the selection command is input, and synchronize the glasses apparatus to the content displayed at the point when the selection command is input. Accordingly, the user may view the content that he/she wants according to the selection command.

Meanwhile, the conversion operation may be performed while the switching command is received from the glasses apparatus. That is, the control unit 160 may control to perform the content changing operation at the point where the switching command is received, and then to stop the content conversion operation at the point when receiving the switching command ends.

Meanwhile, the interface unit 210 which is part of the glasses apparatus 200 may perform communication with the display apparatus 100. As aforementioned, the interface unit 210 of the glasses apparatus 200 has a Bluetooth communication module and may perform wireless communication with the display apparatus, and may use communication methods such as infrared ray communication, Zigbee method etc. besides the Bluetooth method.

The glasses control unit 220 may transmit the content changing command to the display apparatus, and change the content to consecutively convert the viewable content from among the plurality of content.

That is, the glasses control unit 220 may transmit the content changing command to the display apparatus to change the placement pattern of the image frame of each of the content in the display apparatus, or control the operations of the display apparatus in order to change the synchronization signal. In addition, the glasses control unit 220 may transmit the selection command to the display apparatus and control the operations of the display apparatus so that the place pattern of the content or the synchronization signal is fixed at the point when the selection command is input. Explanation of the display apparatus has been made hereinabove, and thus repeated explanation is omitted.

The switching command and selection command may be input from the user through the input button 210 provided in the glasses apparatus. For example, the glasses apparatus may have a button embodied as a touch sensor or manipulating button etc. provided in the input button 210, and the glasses control unit 220 may transmit the command according to the selection time of when the input button 210 is touched to the display apparatus, and may control the interface unit 260 and shutter glass driving unit 230 according to the corresponding command. However, this is merely an exemplary embodiment, and thus it is possible to embody the content changing command separately as a switching command and selection command, and it is also possible to embody an additional button operation for receiving each of the command.

According to another exemplary embodiment of the present disclosure, when the input button 210 is selected for a predetermined time, the display apparatus 100 may change the placement pattern of the frame or the synchronization signal according to the selection command corresponding to the time of selection to control so that the glasses apparatus is synchronized consecutively to each content, and synchronize the glasses apparatus to the display timing of a certain content according to the selection command. The display apparatus 100 may turn on/off the power according to the power state of the glasses apparatus 200. The display apparatus 100 may also perform the pairing operation according to the power state of the glasses apparatus 200.

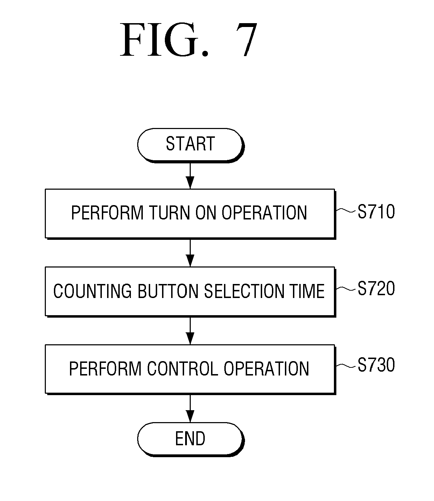

FIG. 7 is a flowchart for explaining a method for driving the glasses apparatus according to an exemplary embodiment of the present disclosure.

With reference to FIG. 7, the method of driving the glasses apparatus according to an exemplary embodiment of the present disclosure includes performing at the glasses apparatus a turn on operation (S710), counting a time the input button is selected (S720), and performing a control operation corresponding to the selection time (S730).

The performing by the glasses apparatus a turn on operation (S710) includes the power of the glasses apparatus 200 performing a turn on operation when the input button 210 is pushed in a state where the power of the glasses apparatus 200 is turned off. The turn on operation is initiated as the power of the power unit is supplied to the glasses control unit of the glasses apparatus 200.

The counting the time the input button is selected (S720) includes counting the time of the point when the input button is selected and the time of the point when the input button is not selected in a case where the input button is selected in a state where the glasses apparatus 200 is turned off. Sensing the point when the input button is selected senses and detects an electrical change which occurs as the input button is pushed, and senses and detects an electrical change which occurs as input button is not pushed. It may be embodied to generate a predetermined size of current in the control unit when the input button is pushed.

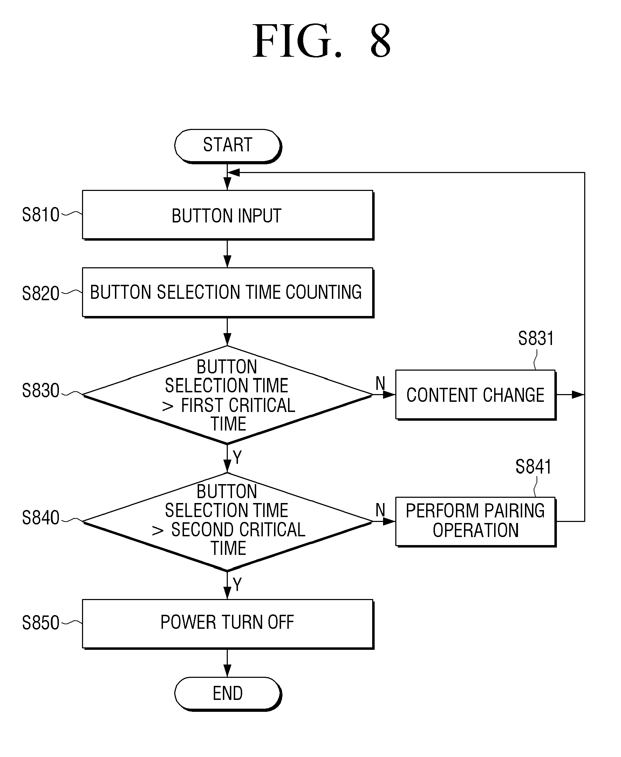

FIG. 8 is a flowchart for explaining in detail a control operation using the glasses apparatus according to an exemplary embodiment of the present disclosure.

With reference to FIG. 8, the control operation using the glasses apparatus includes button inputting (S810), counting the time the button is selected (S820), comparing the time the button is selected with the first critical time (S830), changing the content (S831), comparing the time the button is selected with the second critical time (S840), performing a pairing (S841) and turning off power of the glasses apparatus (S850).

The button inputting (S810) is performed by the user manipulating the input button provided in the glasses apparatus 200. The user performs a button manipulation corresponding to a wanted control command by touching or pushing the input button 210 for a predetermined time. Herein, the button inputting is from the point when the user starts to push the input button 210 until when the pushing operation ends.

The counting the time the button is selected (S820) counts the time the user selects the input button 210 until the point when selection ends. The method of counting a predetermined time is similar to the method performed by the general counter, and thus detailed explanation will be omitted.

Comparing the button selection time and the first critical time (S830) compares a result of counting the time the button is selected by the user with the first critical time. Herein, the first critical time may be predetermined as 1 second being a default value. This default value may be changed by the user.

In a case where the button selection time selected by the user is smaller than or equal to the first critical time (S830-N), the content currently being viewed is changed (S831). Herein, the changing the content (S831) changes a certain content that the user is currently viewing (for example, the content received from an internet broadcasting station) into other content that the display apparatus 100 is currently displaying (for example, the content received from a cable broadcasting station). If the button selection time selected by the user is larger than the first critical time (S830-Y), the button selection time is compared with the second critical time (S840).

The comparing of the button selection time and the second critical time (S840) compares the button selection time selected by the user with the second critical time if the button selection time selected by the user is larger than the first critical time. Herein, the second critical time may be predetermined as 3 seconds being the default value. This default value may be changed by the user.

In a case where the button selection time selected by the user is smaller than or equal to the second critical time (S840-N), pairing of the current glasses apparatus 200 is performed again (S841). Herein, the performing of the pairing operation (S841) interfaces data while sharing information of each other through a wireless transmitting unit between the glasses apparatus 200 and display apparatus 100. That is, in a case where the glasses apparatus 200 has an RF method, ID of the glasses apparatus is transmitted to the display apparatus 100, and the display apparatus 100 certifies the glasses apparatus based on the ID information received from the glasses apparatus. Regarding the certified glasses apparatus, as login approval information which allows log in is transmitted to the glasses apparatus, a pairing is performed between the glasses apparatus 200 and display apparatus 100. If the button selection time selected by the user is larger than the second critical time (S840-Y), the power of the glasses apparatus 200 is turned off (S850).

The turning off of the power (S850) turns off the driving of the glasses apparatus 200 by controlling the operations of the power unit which supplies power to the glasses apparatus 200 and blocking the power supply to the glasses apparatus 200. Otherwise, it blocks a part of power to supply a minimum power to the glasses apparatus 200, so that the glasses apparatus 200 operates in a minimum power consumption mode.

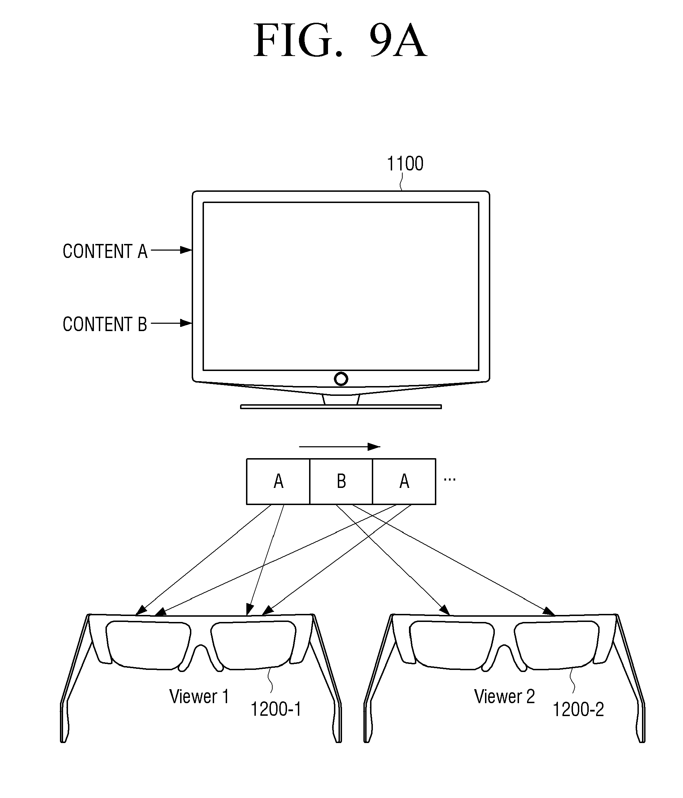

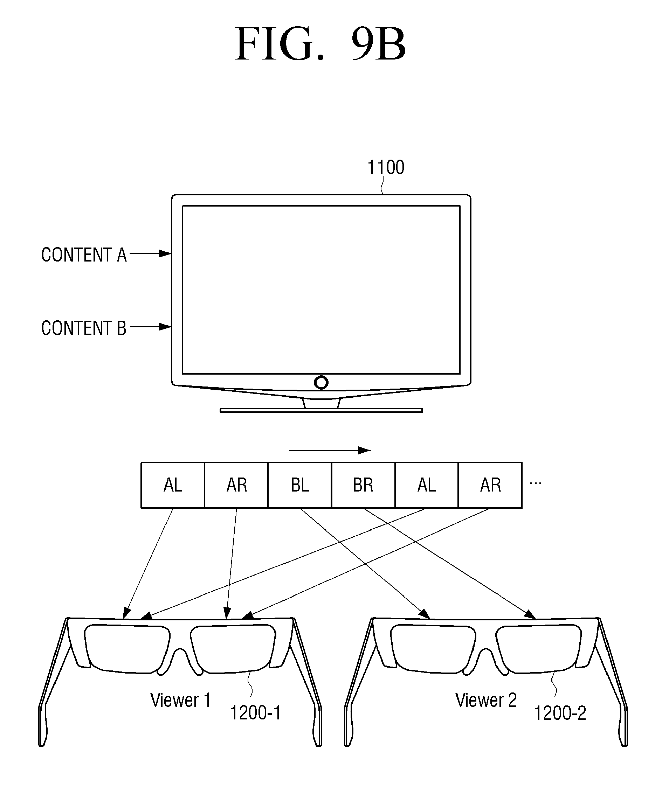

FIGs. 9a and 9b are mimetic diagrams illustrating a configuration of a system which provides a plurality of content according to another exemplary embodiment of the present disclosure. FIGs. 9a and 9b are similar to FIGs. 1 and 2, but are for explaining a concept of a content view and a content provision system in a case of 2D and 3D content.

As illustrated in FIGs. 9a and 9b, the content provision system includes the display apparatus 1100 and a plurality of glasses apparatus 1200-1, 1200-2. FIGs. 9a and 9b illustrate 2 glasses apparatuses 1200 for convenience of explanation, but there is no limit to the number of glasses apparatus 1200, and thus there may be one or more glasses apparatuses.

FIG. 9a is a view explaining a system which provides a plurality of 2D content according to an exemplary embodiment of the present disclosure.

The display apparatus 1100 displays a plurality of 2D content (content A, B) to a plurality of content views (content views 1, 2) alternately, and generates a synchronization signal which synchronizes corresponding glasses apparatuses 1200-1, 1200-2 to each content view, and transmits the synchronization signal to the glasses apparatus 1200-1, 1200-2.

In this case, when content A is displayed according to the synchronization signal, the glasses apparatus 1200-1 opens both the left side shutter glass and right side shutter glass, and may operate to turn off both the left side shutter glass and right shutter glass when content B is displayed. Accordingly, user 1 (viewer 1) who wears glasses apparatus 1200-1 may view only one content A displayed on content view A synchronized to glasses apparatus 1200-1 from among a plurality of content (A, B) displayed alternately. Likewise, a viewer wearing glasses apparatus 1200-2 may view only content B.

FIG. 9b is a view for explaining a system which provides a plurality of 3D content according to an exemplary embodiment of the present disclosure.

As illustrated, in a case where the plurality of 3D content (content A, B) are 3D content, the display apparatus 1100 may alternately display the left eye image and right eye image of each 3D content, while alternately displaying the plurality of 3D content (content A, B).

For example, it is possible to display the left eye image and right eye image AL, AR of 3D content A and the left eye image and right eye image BL, BR of 3D content B, alternately. In this case, glasses apparatus 1, 1200-1 which is synchronized to content view 1 may open the left eye and right eye glass at the display point of the left eye image and right eye image AL, AR of 3D content A, and glasses apparatus 2, 1200-2 synchronized to content view 2 may open the left eye and right eye glass at the display point of the left eye image and right eye image BL, BR of 3D content B.

Accordingly, viewer 1 wearing glasses apparatus 1200-1 views only 3D content A, and viewer 2 wearing glasses apparatus 1200-2 views only 3D content B.

Herein, a content view refers to a collection of image frames regarding one of the content that a viewer wearing a glasses apparatus can see when image frames of each of the content are placed alternately and displayed. However, content view is a concept different from each of the content. For example, in a case where viewer 1 changes a TV channel while wearing glasses apparatus 1200-1 synchronized to content view 1 and viewing content A, or playing other DVD content and viewing content C, content A is changed to C but content view 1 is not changed. A content view is similar to viewing a type of channel where one can view different content at each content view similar to viewing different content on each channel.

Meanwhile, the display apparatus 1100 and glasses apparatus 1200 may communicate using various wireless communication technologies such as Wi-Fi, Bluetooth, IRDA(Infrared Data Association), RF(Radio Frequency), IEEE 802.11, WLAN, HR WPAN, UWB, LR WPAN, IEEE 1394, etc.

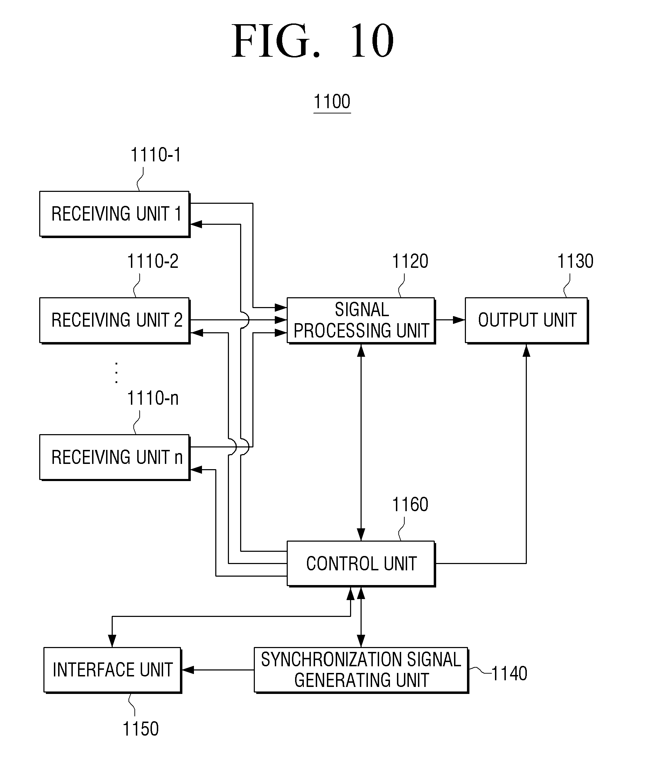

FIG. 10 is a block diagram illustrating a configuration of a display apparatus according to another exemplary embodiment of the present disclosure. The configuration of the display apparatus was explained with reference to FIG. 4, and thus hereinbelow are mainly the differences, and overlapping parts will be explained briefly.

According to FIG. 10, the display apparatus 1100 includes a plurality of receiving units 1110-1, 1110-2, ..., 1110-n, signal processing unit 1120, display apparatus 1130, synchronization signal generating unit 1140, interface unit 1150, and control unit 1160.

The plurality of receiving units 1110-1, 1110-2, ..., 1110-n receive a plurality of content, respectively.

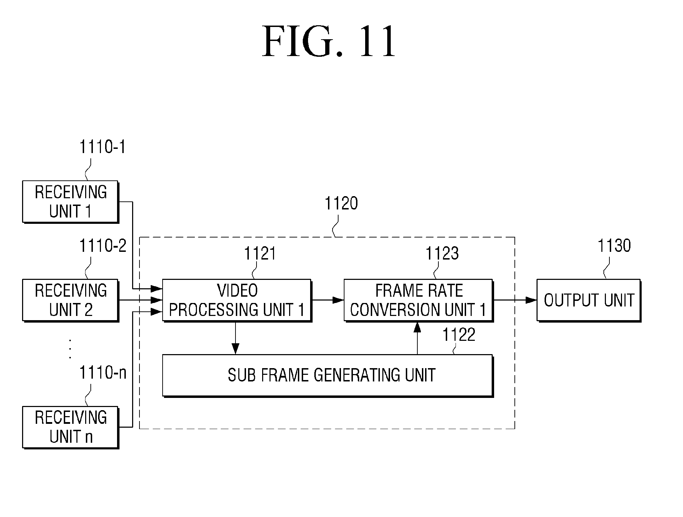

The signal processing unit 1120 processes each of the content received from the plurality of receiving units 1110-1, 1110-2, **...,** 1110-n, and forms image frames. The signal processing unit 1120 will be explained in more detail with reference to FIG. 11.

FIG. 11 is a block diagram for explaining in detail the configuration of the signal processing unit according to another exemplary embodiment of the present disclosure.

As illustrated in FIG. 11, the signal processing unit 1120 includes a video processing unit 1121, sub frame generating unit 1122 and frame rate conversion unit 1123.

The video processing unit 1121 performs signal processing on video data included in each content received from the plurality of receiving units 1110-1, 1110-2, ..., 1110-n and forms image frames.

The sub frame generating unit 1122 generates a sub frame for limited viewing of each image frame. That is, the sub frame generating unit 1122 receives input of the image frame of each of the content from the video processing unit 1121 and generates a sub frame corresponding to each image frame.

The sub frame may be a frame which is combined with the image frame and generated to perceive the image frame as white noise, when the sub frame is consecutively displayed with the image frame. In a case where the sub frame is a complementary frame corresponding to the image frame, it may be perceived as a white frame when it is consecutively displayed with the image frame.

Accordingly, a viewer with limited viewing authority may not be able to view content for which viewing is limited even when viewing the display screen without wearing the glasses apparatus.

The frame rate conversion unit 1123 converts a frame rate of each content provided from the video processing unit 1121 and sub frame generating unit 1122 into frame rate that is adequate as an output frame rate.

The display unit 1130 combines the image frame and sub frame of the content output from the signal processing unit 1120 and displays a plurality of content views. The display unit 1130 is a configuration which corresponds to the video output unit of among the configuration of the output unit 130 in FIG. 4. More specifically, the display unit 1130 multiplexes the image frame and sub frame of each content provided from the signal processing unit 1120 one by one alternately, and displays the plurality of content views. According to circumstances, the display unit 1130 may perform an up or down scaling in accordance to the screen size of the image frame regarding each of the content.

The user wears the glasses apparatus 1200 linked with the timing of the content view that is displayed in the display unit 1130, and views the content that he/she wants.

In a case of using a plurality of 3D content, the sub frame generating unit 122 generates a sub frame for the left eye image and right eye images, and the display unit 1130 may multiplex each sub frame of the left eye image and right eye image included in each 3D content provided in the frame rate conversion unit 1123 in a predetermined placement format and display them, and the user perceives the left eye image and right eye image of one content through the glasses apparatus 1200.

According to the display timing of each content view, the synchronization signal generating unit 1140 generates a synchronization signal which synchronizes the glasses apparatus corresponding to each view. Meanwhile, the content view does not include the sub frame generated in the sub frame generating unit 1122, and thus the synchronization signal generating unit 1140 may generate a synchronization signal which synchronizes the glasses apparatus according to the timing the image frame except for the sub frame of each content is displayed.

The interface unit 1150 is connected to the glasses apparatus and performs communication. More specifically, the interface unit 1150 may be connected to the glasses apparatus according to the predetermined communication standard and perform communication.

The control unit 1160 controls overall operations of the display apparatus 1100. More specifically, the control unit 1140 controls each of the plurality of receiving units 110-1, 1110-2, ..., 1110-n, signal processing unit 1120, display unit 1130, synchronization signal generating unit 1140, and interface unit, to perform corresponding operations.

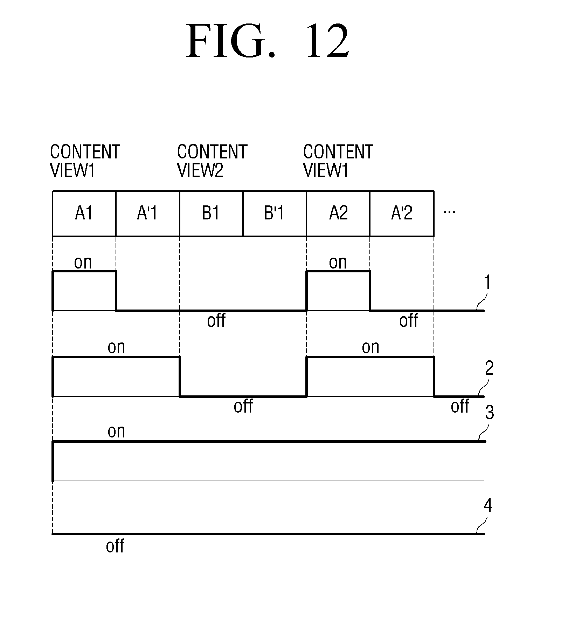

In addition, according to whether or not there is viewing authority on the content displayed on the content view mapped with the glasses apparatus 1200, the control unit 1160 allows limited viewing of the content. That is, it is determined whether or not the glasses apparatus 1200 mapped with the content view has an authority to view the corresponding content, and if there is not viewing authority, viewing of the content may be limited. This will be explained in more detail with reference to FIG. 12.

FIG. 12 is a view for explaining a synchronization signal for restrictively (e.g., selectively) allowing viewing the content.

In the display apparatus, the image frame of content A and B and their sub frames are displayed alternately. Meanwhile, the glasses apparatus is mapped with content view 1, and on content view 1, content A is displayed. In addition, on content view 2, content B is displayed.

When the glasses apparatus has a viewing authority for content, the glasses apparatus controls the interface unit 150 to transmit synchronization signal 1 for turning on the glasses apparatus for a section where the image frame is displayed. Accordingly, the viewer wearing the glasses apparatus may view only image frames A1, A2, ..., An of content A.

Meanwhile, when the glasses apparatus does not have a viewing authority for the content, the glasses apparatus may control the synchronization signal generating unit 140 and interface unit 150 to generate synchronization signal 2 for turning on the glasses apparatus for the section where the image frame and sub frame are displayed and to transmit the signal to the glasses apparatus.

Accordingly, the viewer wearing the glasses apparatus becomes able to view at the same time the image frames A1, A2, ..., An and sub frames A'1, A'2, ..., A'n, and when the sub frame is generated as a complementary frame, the viewer becomes able to view only the white screen, and in a case where it is generated to perceive as white noise, the viewer is not able to view content A because of the white noise.

Furthermore, when the glasses apparatus does not have a viewing authority for the content, it is possible to control the synchronization signal generating unit 1140 to generate synchronization signals 3, 4 of a disable state, and control the interface unit 1150 to transmit synchronization signals 3, 4 of a disable state to the glasses apparatus.

Herein, a synchronization signal of a disable state is a synchronization signal which makes the glasses apparatus inoperable, that is, which keeps the shutter glass on or keeps the shutter glass turns off.

Accordingly, the viewer wearing the glasses apparatus becomes is unable to see anything, or becomes able to see both the image frame and sub frame of content A, B, that is, not able to see the content in a normal manner.

In addition, when the glasses apparatus does not have a viewing authority for the content, it may control the interface unit 1150 to not transmit the synchronization signal.

Meanwhile, when the glasses apparatus 1200 is connected to the interface unit 1150 of the display apparatus 1100, the glasses apparatus 1200 transmits unique identification information to the interface unit 1150. The user may input the selection command for selecting a content view in order to view one content view from among the plurality of content views. When the user selects a content view, the glasses apparatus 1200 that the users wears is mapped with the corresponding content view. Otherwise, the glasses apparatus may be automatically mapped with one of the plurality of content views. Furthermore, the control unit 1140 may use the identification information received from the glasses apparatus 1200 to determine whether or not the corresponding glasses apparatus has viewing authority for the content displayed in the content view.

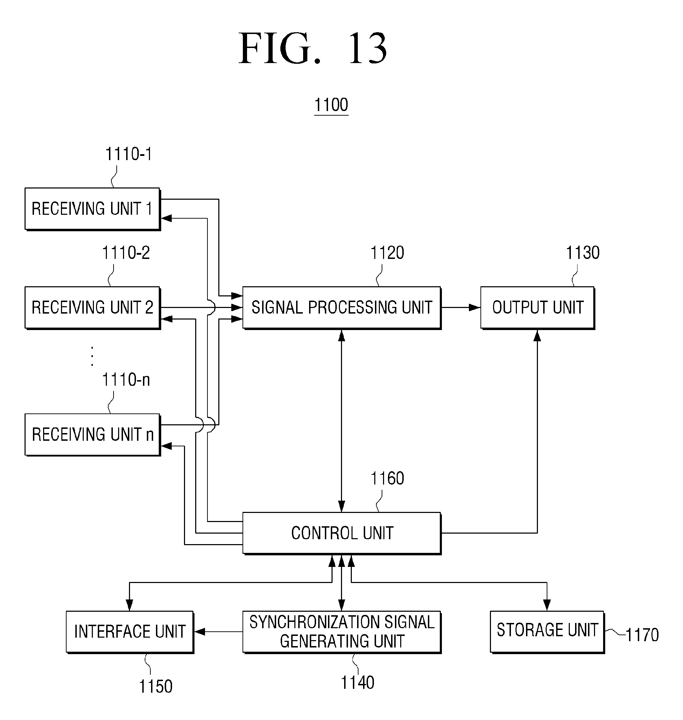

FIG. 13 is a block diagram illustrating a configuration of the display apparatus 1100 according to another exemplary embodiment of the present disclosure.

According to FIG. 13, the display apparatus 1100 may further include a storage unit 1170 in addition to the plurality of receiving units 1110-1, 1110-2, ..., 1110-n, signal processing unit 1120 (e.g., a signal processor), output unit 1130 (e.g., a display), synchronization signal generating unit 1140(e.g., a synchronization signal generator), interface unit 1150 (e.g., an interface), and control unit 1160 (e.g., a controller).

The storage unit 170 stores viewing authority information. More specifically, the storage unit 1170 may store viewing authority information for determining whether or not the glasses apparatus 1200 has viewing authority for the content. In addition, the viewing authority information stored in the storage unit 1170 may be set and changed by the user. In addition, the viewing authority information may be set by channel, content, or glasses apparatus.

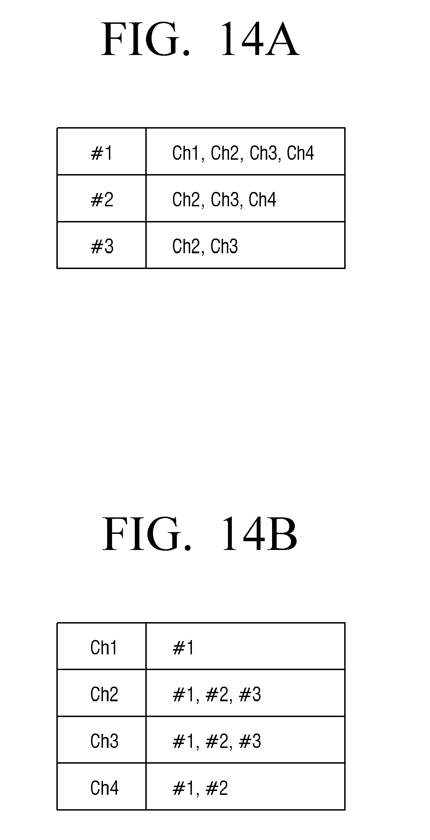

Meanwhile, when the identification information is received from the glasses apparatus through the interface unit 1150, the control unit 1160 may use the received identification information and the viewing authority information pre-stored in the storage unit to determine whether or not the glasses apparatus has the viewing authority. A more detailed explanation will be made with reference to FIGs. 14a and 14b.

FIG. 14a is a view illustrating viewing authority information set by glasses apparatus.

#1, #2 and #3 in FIG. 14a indicate unique identification information of the glasses apparatus, while Ch1, Ch2, Ch3 and Ch4 indicate broadcasting channels. According to FIG. 14a, viewing authority information is set by glasses apparatus. The glasses apparatus having identification information #1 has the viewing authority for changes Ch1, Ch2, Ch3, and Ch4. In addition, the glasses apparatus having identification information #2 has the viewing authority for channels Ch2, Ch3, and Ch4, and the glasses apparatus having identification information #3 has the viewing authority for channels Ch2 and Ch3.

Herein, when the glasses apparatus 1200 is connected to the interface unit 1150 of the display apparatus 1100, the glasses apparatus 1200 transmits the unique identification information to the interface unit 1150. The user may input a user command for selecting a content view in order to view one content view of among the plurality of content views. When the user selects one content view, the glasses apparatus 1200 that the user is wearing is mapped with the corresponding content view. Otherwise, the glasses apparatus may be automatically mapped with one of the plurality of content views. In addition, the control unit 1140 may determine whether or not the corresponding glass apparatus has the viewing authority for the content displayed on the content view using the identification information received from the glasses apparatus 1200 and the viewing authority information pre-stored in the storage unit 1170.

For example, when the glasses apparatus having identification information #2 is connected to the interface unit 1150, it transmits identification information #2 to the interface unit 1150. In addition, when the user selects one content view from among the plurality of content views, the glasses apparatus having the selected content view and identification information #2 are mapped. The control unit 1160 checks the channel information of the content displayed on the content view, and uses the viewing authority information stored in the storage unit 1170 to check whether or not the glasses apparatus having identification information #2 has the viewing authority for the channel of the selected content view. If there is not viewing authority for the channel, it may be determined that the glasses apparatus has no viewing authority for all content of the channel.

In a case where the channel information of the content displayed on the content view selected by the user is Ch2, the control unit 1160 determines that the glasses apparatus having identification information #2 has the viewing authority for the content since the glasses apparatus has the viewing authority for Ch2, and the interface unit 1150 transmits the synchronization signal corresponding to the content view that the user selected to the glasses apparatus.

However, in a case where the channel information of the content displayed on the content view is Ch1, the glasses apparatus having identification information #2 does not have the viewing authority for Ch1, and thus the control unit 1160 determines that the glasses apparatus does not have the viewing authority for the content and thus may not transmit the synchronization signal to the glasses apparatus or control so as to generate a synchronization signal of a disable state and to transmit the signal to the glasses apparatus. Otherwise, it may generate a synchronization signal synchronized to the display timing of the image frame and sub frame of the content and transmit the signal to the glasses apparatus.

FIG. 14b is a view illustrating viewing authority information set by channel.

With reference to FIG. 14b, it can be seen that the viewing authority information is set by each channel. Herein, the process of restrictively (e.g., selectively) allowing viewing for the content using the viewing authority information is the same as explained with reference to FIG. 14a, except for the method the viewing authority information is stored.

Herein, the viewing authority information may be set and changed by the user. More specifically, the user may set the viewing authority by channel or glasses apparatus, and may change the set viewing authority.

Hereinabove, the viewing authority information was explained using an example of a glasses apparatus having authority by each channel or glasses apparatus or of a glasses apparatus having viewing authority information where channels are set, but not only is it possible to set channels and glasses apparatus having the viewing authority information but it is also possible to set and store channels and glasses apparatuses not having viewing authority.

In addition, although the aforementioned was based on an example where the viewing authority information is set by channel or glasses apparatus, the present disclosure is not limited thereto, and thus any method is possible as long as it is possible to set information on viewing authority between the glasses apparatus and content.

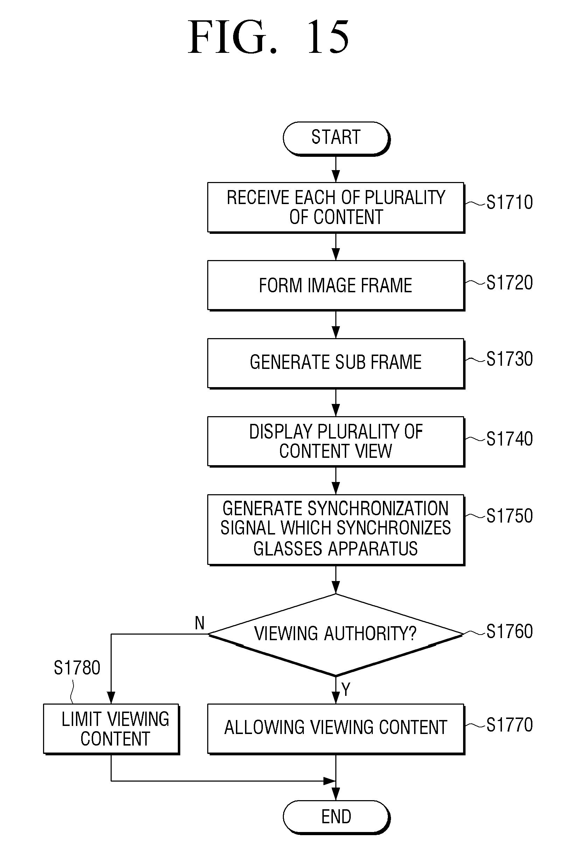

FIG. 15 is a flowchart illustrating a control method of a display apparatus and glasses apparatus according to another exemplary embodiment of the present disclosure.

According to FIG. 15, a plurality of content are received, respectively (S1710). Next, an image frame is formed (S1720). That is, each of the received plurality of content is processed and an image frame is formed. Then, a sub frame for limiting viewing of each image frame is formed (S1730). When the sub frame is displayed consecutively with the image frame, it is combined with the image frame and may be generated to be perceived as a white noise frame. Otherwise, it may be generated as a complementary frame corresponding to the image frame.

In addition, a plurality of content views is displayed (S1740). More specifically, the image frame and sub frame are combined to display a plurality of content views. Then, a synchronization signal for synchronizing the glasses apparatus is generated (S1750). More specifically, the synchronization signal which synchronizes the glasses apparatus at the output timing of the content view mapped with the glasses apparatus of among the plurality of the content views is generated. In addition, whether or not the glasses apparatus has a viewing authority for the content displayed on the content view is determined (S1760).

When the glasses apparatus has a viewing authority for the content (S1760-Y), viewing the content is allowed (S1770). More specifically, it is possible to transmit a synchronization signal for turning on the glasses apparatus during the section when the image frame is output to the glasses apparatus.

When the glasses apparatus does not have a viewing authority for the content (S1760-N), viewing the content is limited (S1780). More specifically, it is possible to not transmit a synchronization signal for the glasses apparatus, to generate and transmit the synchronization signal of a disable state, or generate and transmit to the glasses apparatus the synchronization signal for turning on the glasses apparatus during the section the image frame and sub frame are displayed.

Herein, when determining whether or not the glasses apparatus has a viewing authority, when identification information is received from the glasses apparatus, it is possible to use the identification information and pre-stored viewing authority information to determine whether or not the glasses apparatus has the viewing authority. In addition, the viewing authority information may be set and changed by the user. Accordingly, when providing a plurality of images to a plurality of viewers, it is possible to limit viewing of the content by viewer, in which case a viewer for whom viewing is limited cannot see the limited content image even if he/she sees the display screen without the glasses apparatus.

Meanwhile, the aforementioned program for performing a method according to various exemplary embodiments of the present disclosure may be stored in various types of record media and be used.

More specifically, a code for performing the aforementioned methods may be stored in various types of nonvolatile record media such as flash memory, ROM (Read Only Memory), EPROM (Erasable Programmable ROM), EEPROM (Electronically Erasable and Programmable ROM), hard disk, removable disk, memory card, USB memory, and CD-ROM.

Although a few exemplary embodiments of the inventive concept have been shown and described, it would be appreciated by those skilled in the art that changes may be made to the exemplary embodiments without departing from the scope of the inventive concept, as defined in the claims.

## Claims

1. A glasses apparatus which is operatively linked with a display apparatus which alternately displays a plurality of content in image frame units, the glasses apparatus comprising:
an input button; and
a controller which performs a turn on operation when the input button is selected in a state where the glasses apparatus is turned off, and when the input button is pushed in a state where the glasses apparatus is turned on, performs a different control operation corresponding to a duration that the input button is pushed, a number of times the input button is pushed, or both the duration and the number of times the input button is pushed.

2. The glasses apparatus according to claim 1, wherein the number of times the input button is pushed is counted for a predetermined duration.

3. The glasses apparatus according to any one of claims 1 and 2 further comprising:
an interface which communicates with the display apparatus,
wherein the controller transmits a content changing command for changing content from among the plurality of content through the interface, and performs a content changing operation, when the input button is selected for a duration that is less than or equal to a predetermined first critical time in a state where the glasses apparatus is turned on.

4. The glasses apparatus according to claim 3, wherein the controller controls the interface and performs a pairing operation with the display apparatus, when the input button is selected for a duration that is more than the predetermined first critical time and is less than or equal to a second critical time in a state where the glasses apparatus is turned on.

5. The glasses apparatus according to claim 4, wherein the controller performs a turn off operation, when the input button is selected for a duration that is more than the second critical time in a state where the glasses apparatus is turned on.

6. The glasses apparatus according to any one of claims 1 to 5 further comprising:
a sensor which senses whether or not the glasses apparatus is in use,
wherein the controller performs a turn off operation when the glasses apparatus is not in use for a predetermined time.

7. A control method of a glasses apparatus which is operatively linked with a display apparatus alternately displaying a plurality of content in image frame units, the control method comprising:
performing a turn on operation when an input button provided in the glasses apparatus is selected in a state where the glasses apparatus is turned off;
counting a selection time that the input button is selected in a state where the glasses apparatus is turned on; and
performing a control operation corresponding to the counted selection time.

8. The control method according to claim 7, wherein the performing the control operation transmits a content changing command for changing viewable content from among the plurality of content to the display apparatus, and performs the content changing command when the selection time of the input button is equal to or less than a predetermined first critical time.

9. The control method according to claim 8, wherein the performing the control operation performs a pairing operation between the glasses apparatus and the display apparatus, when the selection time of the input button is more than the predetermined first critical time and is equal to or less than a second critical time.

10. A display apparatus comprising:
a plurality of receivers, wherein each of the plurality of receivers receives a plurality of content;
a signal processor which processes each of the received plurality of content, forms image frames, and generates sub frames for limiting a viewing of each image frame;
a display which combines the image frames and sub frames output from the signal processor and displays a plurality of content views;
an interface which is connected to a glasses apparatus according to a predetermined communication standard;
a synchronization signal generator which generates a synchronization signal that synchronizes the glasses apparatus at an output timing of a content view mapped to the glasses apparatus from among the plurality of content views; and
a controller which selectively allows viewing of a displayed content from among the plurality content, according to whether or not there is a viewing authority to view the displayed content on the mapped content view.

11. The display apparatus according to claim 10, wherein the sub frame is a frame that is generated when it is displayed in combination with the image frame so that the image frame is perceived as a white noise frame, or a complementary frame corresponding to the image frame.

12. The display apparatus according to any one of claims 10 and 11, wherein the controller controls the interface to transmit to the glasses apparatus the synchronization signal for turning on the glasses apparatus during a section when the image frame is displayed, when the glasses apparatus has a viewing authority to view the displayed content, and
controls the synchronization signal generator and interface to generate the synchronization signal for turning on the glasses apparatus and to transmit the generated synchronization signal to the glasses apparatus during the section when the image frame and sub frame are displayed, when the glasses apparatus does not have a viewing authority to view the displayed content.

13. The display apparatus according to any one of claims 10 and 11, wherein the controller controls the interface to transmit to the glasses apparatus the synchronization signal for turning on the glasses apparatus during the section when the image frame is displayed when the glasses apparatus has a viewing authority to view the displayed content, and
controls the synchronization signal generator and interface to generate a synchronization signal of a disable state and transmit the generated synchronization signal to the glasses apparatus, when the glasses apparatus does not have a viewing authority to view the displayed content.

14. The display apparatus according to any one of claims 10 to 13 further comprising:
a storage where viewing authority information is stored,
wherein the controller determines whether or not the glasses apparatus has a viewing authority using identification information and viewing authority information pre-stored in the storage when the identification information is received from the glasses apparatus through the interface.

15. A control method of a display apparatus, the control method comprising:
receiving each of a plurality of content;
processing each of the received plurality of content, forming image frames, and generating sub frames for limiting a viewing of each image frame;
combining the image frames and the sub frames and displaying a plurality of content views;
generating a synchronization signal which synchronizes a glasses apparatus at an output timing of a content view mapped to the glasses apparatus from among the plurality of content views; and
selectively allowing viewing of a displayed content of the received plurality of content, according to whether or not there is a viewing authority to view the displayed content on the mapped content view.
